# EUROPÄISCHE PATENTSCHRIFT

(11) **EP 1 084 912 B1**
(45) Veröffentlichungstag und Bekanntmachung des Hinweises auf die Patenterteilung: **19.01.2005**
(21) Anmeldenummer: 99890298.5
(22) Anmeldetag: 15.09.1999
(51) Int. Cl.: B60R 16/02

(54) **Elektrischer Leiterkreis**
Electric conductor circuit
Circuit de conducteurs électriques

(43) Veröffentlichungstag der Anmeldung: 21.03.2001
(60) Teilanmeldung: 04026420.2
(73) Patentinhaber: I & T Innovation Technology Entwicklungs- und Holding Aktiengesellschaft, 7011 Siegendorf (AT)
(72) Erfinder: I & T Innovation Technology Entwicklungs- und Holding Aktiengesellschaft, 7011 Siegendorf (AT)
(74) Vertreter: Patentanwälte BARGER, PISO & PARTNER

(56) Entgegenhaltungen:
- EP-A- 0 778 587
- DE-A- 2 333 170
- DE-A- 4 419 895

## Beschreibung

Die Erfindung betrifft ein Verfahren zur Herstellung eines Rohlings, gebildet aus einem Flachkabel, einem sogenannten FFC, gemäß dem Oberbegriff des Anspruches 1 und eine Vorrichtung zu dessen Herstellung entsprechend dem Oberbegriff des Anspruches 3.

Die gattungsbildende EP 0 778 587 A beschreibt ein Flachkabel gebildet aus einzelnen parallel angeordneten Drähten, die an passenden Stellen durch ein Verstärkungsband (reinforcing tape) miteinander verbunden werden. Im Bereich zwischen zwei reinforcing tapes besteht keine Verbindung zwischen den einzelnen Drähten. Die reinforcing tapes sind von oben und unten mittels Harzkleber an die parallele Anordnung von Drähten angebracht. Die Drähte sind auch im Bereich dieser Verstärkungen nicht vollständig eingebettet. Noch bevor die reinforcing tapes, zunächst als Endlosmaterial zur Verfügung stehend, an die parallele Anordnung von Drähten angebracht und entsprechend gekürzt werden, werden sie von einem Drucker mit Unterscheidungsmarkierungen für die einzelnen Drähte versehen. Bezogen auf diese spezielle Art der parallelen Anordnung von Drähten beschreibt diese Druckschrift Verfahren, zur Weiterverarbeitung. Diese umfassen Vorrichtungen zum Ablängen der Drähte und zum Anbringen von Steckverbindungen.

Die DE 23 33 170 A beschreibt ein Verfahren zur Herstellung eines flexiblen Kabelbaumes. Dabei wird ein Draht auf eine mit Kleber beschichtete Kunststoffolie gedrückt, die auf einer beweglichen Tischplatte bewegt werden kann. Zur Abdeckung von Draht und erster Kunststoffolie wird eine zweite Kunststoffolie zugeführt.

Die DE 44 19 895 A beschreibt eine Verbindungsanordung in einer Kabelbaum-Montagegruppe. Im wesentlichen bestehen die Kabelbäume aus Drahtbündel, bestehend aus zueinander parallel verlaufenden, ähnlich wie in der EP 0 778 587 A nichverbundenen Drähten, die mittels elektrisch isolierender Glieder, die in Form einer Scheibe oder einer dünnen Platte gebildet sind, miteinander verbunden sind. Öffnungen zur Kontaktierung von Abzweigdrähten beziehen sich auf Öffnungen in der lsolierschicht. Die Faltung eines Arrangements bestehend aus mehreren durch Scheiben verbundenen Abschnitten ist nur im Bereich der nichtverbundenen Drähte möglich, die Isolierscheiben sind nicht biegsam.

Die Nachteile, die sich aus dem Stand der Technik ergeben, begründen sich darin, dass die maschinelle Weiterverarbeitung der Drahtanordnungen aufwendig und teuer ist. Die verschiedenen Drahtanordnungen, wie sie in obigen Druckschriften beschrieben sind, weisen an unterschiedlichen Stellen unterschiedliche Eigenschaften, was den Querschnitt, die Zugfestigkeit und die isolierenden Eigenschaften betrifft, aus. Die zur Weiterverarbeitung erforderlichen Verfahren müssen diesen Eigenschaften Rechnung tragen und sind nur für diese speziellen Drahtanordnungen einsetzbar.

Der große Bedarf an elektrischen Leiterkreisen in Kraftfahrzeugen erfordert hingegen einfach handhabbare und gleichzeitig zuverlässige, den elektrischen und mechanischen Anforderungen entsprechende Ausgangsmaterialien sowie effiziente Verfahren zu deren Herstellung. Ein Hauptaugenmerk bei der industriellen Verarbeitung liegt dabei auf der Erkennbarkeit, Greifbarkeit und Beweglichkeit der Drahtanordnungen.

Üblicherweise werden die einzelnen elektrischen Verbraucher eines Kraftfahrzeuges mittels sogenannter Kabelbäume versorgt. Diese Kabelbäume gehörten zu den wenigen Bestandteilen zeitgenössischer Kraftfahrzeuge, die noch in Handarbeit hergestellt werden. Dazu werden auf großformatigen Brettern, in die massive Nägel teilweise eingeschlagen sind, die teilweise über die Brettoberfläche hervorstehen, einzelne Kabel oder vorbereitete Kabelstücke passend angeordnet, fixiert und sodann mit entsprechenden Verbindungselementen untereinander verbunden, bis ein Gebilde entstanden ist, das entfernt an einen Baum samt Wurzeln erinnert, woher auch der Name Kabelbaum stammt.

Ursprünglich wurden im Kraftfahrzeugbau die metallischen Teile des Kraftfahrzeugs als Masse verwendet und es wurde den einzelnen Verbrauchern nur der Strom zugeführt, der Kreis wurde über die Masse geschlossen. Seit längerem ist man mehr und mehr davon abgegangen und führt den elektrischen Verbrauchern den Strom nicht nur über eine stromführende Leitung zu, sondern führt den Strom über Kabel gesondert von der Masse wieder ab. Eine weitere Tendenz besteht darin, eine ganze Reihe von Verbrauchern ähnlich wie die Heizkörper eines Zentralheizungssystems zwischen der Stromzu- und rückfuhr anzuordnen und jeden Verbraucher an Ort und Stelle zu schalten, wobei die dazu notwendigen Schaltbefehle über einen zweipoligen Datenbus (CAN) (zweipoliges Kabel) übermittelt werden, der zu jedem derartigen Verbraucher geführt wird, und wobei jeder Verbraucher mittels entsprechender logischer Bausteine die ihn betreffenden Informationen erkennt und interpretiert und in Abhängigkeit davon den Ruhezustand (Strom aus) oder den Aktivzustand (Strom ein) einnimmt.

Es ist trotz all dieser Versuche einer Vereinfachung und Erleichterung der Handhabbarkeit ein Nachteil unbeseitigt geblieben, der jedem Kabel inherent ist:

Dies ist die Biegeweichheit in zwei Dimensionen, die es unmöglich macht, derartige Kabelabschnitte, wie sie die Kabelbäume nun einmal aufweisen, von den derzeit bestehenden Handhabungsmaschinen (Robotern) im Zuge der KFZ-Herstellung in ein KFZ einbaubar zu machen. Es ist daher notwendig, daß nicht nur die Herstellung der Kabelbäume, sondem auch deren Verlegung im Kraftfahrzeug so gut wie vollständig manuell erfolgt.

Zu all dem kommt noch, daß es in einem zeitgenössischen Kraftfahrzeug nicht nur eine große Anzahl elektrischer Verbraucher gibt, die mit Strom und Steuersignalen versorgt werden müssen, sondern auch eine früher ungeahnte Anzahl an Sensoren, die ihre Meßergebnisse in elektrischer Form zur Verfügung stellen und an entsprechende Steuer-, Regelund Rechenvorrichtungen weiterleiten müssen. Es sei dabei nur an die Schlupf- und Traktionsregelung, an die Außenthermometer zur Warnung vor eventuellem Glatteis, an die Satellitennavigationsinstrumente, an fix eingebaute Telefoneinrichtungen, vereinzelt an Sensoren zur Überwachung der Temperatur und des Luftdrucks von Reifen, der Abnutzung von Bremsbelägen und dergleichen mehr gedacht. Dies bedeutet, daß selbst bei konsequenter Verfolgung der Versorgung der Verbraucher mit einer zweipoligen Energieversorgung und einer zweipoligen Informationsversorgung die Probleme der elektrischen Verkabelung im Kraftfahrzeug auch nicht annähernd gelöst werden können.

Die Erfindung zielt darauf ab, diese Probleme wesentlich zu reduzieren und in letzter Konsequenz zu eliminieren und macht sich dabei die Eigenschaft sogenannter Flachkabel zunutze, in nur einer Richtung, normal zu ihrer Längserstreckung und normal zu ihrer Ebene, biegeweich zu sein und auch in dieser Richtung wesentlich steifer zu sein als übliche Kabel. Derartige Flachkabel, sogenannte FFC (**F**lexible **F**lat **C**ontactors) weisen mehrere elektrische Leiter, zumeist aus Kupfer auf, die parallel zueinander angeordnet sind und zwischen zumindest zwei Schichten aus elektrisch isolierendem, biegeweichen Kunststoffmaterial eingebettet, zumeist eingeschweißt, sind. Es können dabei die Leiter identischen oder unterschiedlichen Querschnitt aufweisen, und es können auch mehr als nur die zwei zwischen den Leitern miteinander verschweißten Deckschichten vorgesehen sein, um beispielsweise Markierungen oder zusätzliche Isolationseigenschaften zu vermitteln. Wesentlich ist, daß derartige FFCs mittels Automaten relativ einfach handhabbar sind und daß auch das Anbringen von Steckern an den Enden der FFCs und das Verbinden dieser Stekker miteinander automatisierbar ist. Es haben allerdings derartige FFCs bisher in der KFZ-Branche keinen Eingang gefunden, da es keine Möglichkeit gegeben hat, derartige FFCs zu den relativ komplizierten Formen, die sie im Kraftfahrzeug einnehmen müssen, zu verarbeiten. Es werden derartige FFCs zur Verbindung von Leiterplatten oder elektrischen Verbrauchern mit Versorgern verwendet, wobei sie eine gewisse Überlänge für die Erleichterung der Handhabung und zur Zugentlastung aufweisen und ansonsten nur an jedem Ende mit einem passenden Stecker versehen sind.

Es ist nun das Kernanliegen der Erfindung, ein Verfahren zur Verfügung zu stellen, das eine solche Bearbeitung bzw. Verarbeitung ermöglicht. Dabei sollen die oben beschriebenen Nachteile und Probleme weitgehend reduziert werden.

Die Erfindung erreicht dieses Ziel durch ein Verfahren der eingangs definierten Art, das dadurch gekennzeichnet ist, daß das FFC von einer Vorratstrommel als Endlosmaterial oder im gegebenenfalls mit Übermaß abgelängtem Zustand von einem Lager mittels eines Greifers in seiner Längsrichtung über einen Tisch gezogen und auf diesem ausgelegt wird, worauf ein dem Greifer abgewandter Bereich des FFC, dessen Ende, von einem Halter am Tisch fixiert und gegebenenfalls in diesem Bereich durchtrennt wird, daß das greiferseitige Ende, bevorzugt unter Anwendung einer vorbestimmten Zugkraft, so am Tisch fixiert wird, daß das FFC in gestreckter Lage am Tisch fixiert ist, und daß gegebenenfalls sodann an vorbestimmten Stellen, Fenster genannt, die Ummantelung von Leitern, beispielsweise mittels Laser oder Plasma oder mechanisch entfernt wird, daß gegebenenfalls zwischen den Leitern an vorbestimmten Stellen Längsschlitze angebracht werden, daß gegebenenfalls vorbestimmte Stellen des FFC mit Markierungen versehen werden, daß das FFC auf genaue Länge geschnitten und gegebenenfalls zumindest ein Ende abisoliert und gegebenenfalls mit einem Stecker versehen wird und daß im Bereich zumindest eines der Enden eine Endmarkierung aufgebracht wird, die den so hergestellten Rohling identifiziert.

Eine effiziente Bearbeitung des Rohlings wird durch eine erfindungsgemäße Vorrichtung ermöglicht. Die Vorrichtung besteht im wesentlichen aus einem Tisch, einem Greifer, einem Halter und zumindest einer Bearbeitungsvorrichtung und ist dadurch gekennzeichnet, dass Greifer und Halter auf einer Längsschiene verfahrbar angeordnet sind. Weiterentwicklungen und Ausgestaltungen sind in Unteransprüchen enthalten.

In einem ersten Schritt werden aus der Endlosware bzw. aus grob abgelängten Stücken der FFC Rohlinge gefertigt, die jeweils aus einem Strang bestehen, der bereits die endgültige Länge aufweist und an den notwendigen Stellen mit Fenstern in der Isolierung, somit blank liegenden Leitern und zumindest einer Endmarkierung zur Identifikation versehen ist und unter Umständen an den Enden bereits Stecker oder absolierte Bereiche aufweist. Die weiteren Markierungen können in der Folge zur Erleichterung der Positionierung des Rohlings verwendet werden.

In einem zweiten Schritt werden die Rohlinge, noch jeder für sich, in die notwendige Form gebracht. Dazu werden durch Faltungsschritte die notwendigen Biegungen hergestellt und es kann, wenn dies notwendig sein sollte, den so hergestellten Folienabschnitten auch eine entsprechende Krümmung aus der Ebene erteilt werden.

Schließlich wird in einem dritten Schritt aus zumindest zwei derartigen Folienabschnitten ein Einbauteil gefertigt. Dazu werden zumindest zwei Rohlinge so übereinander gelegt, daß die Fenster der Leiter, die miteinander verbunden werden sollen fluchtend zueinander zu liegen kommen und es werden die Leiter sodann auf passende Weise (beispielsweise durch Ultraschallschweißen) miteinander verbunden. Dieser Schritt kann, gegebenenfalls nach erfolgter Aufbringung einer Isolierung, um das Auftreten von Kriechströmen oder Masseschlüssen zu vermeiden, durch entsprechendes Anordnen eines dritten, vierten oder weiteren Rohlings wiederholt werden, bis zu guter letzt ein fertiger Einbauteil entstanden ist.

Dieser Einbauteil ist aufgrund seiner Herstellungsweise zwar im wesentlichen zweidimensional, aber keinesfalls notwendigerweise eben ausgebildet. Es können die Krümmungen, die notwendig sind um beispielsweise die Einbauteile den Krümmungen des Dachhimmels oder der Türinnenseite anzupassen, durchaus erhalten werden. Zu bedenken ist dabei nur, daß die FFCs sich an zylindrische bzw. kegelige, somit an parabolisch gekrümmte Flächen anpassen lassen, nicht aber an elliptisch oder hyperbolisch gekrümmte Flächen.

Es werden die drei Verarbeitungsschritte vorteilhafterweise an drei verschiedenen Bearbeitungsstationen vorgenommen, wobei im ersten Schritt die passende Ablängung der FFCs, die Schaffung der Fenster und das Anbringen eventueller Schlitze zwischen einzelnen ihrer Adern erfolgt und auch, was für die Weiterverarbeitung wichtig ist, zumindest eine Markierung aufgebracht wird, die der Identifizierung des so geschaffenen Rohlings dient, während im zweiten Schritt auf einer anderen Station die Formgebung des einzelnen Rohlings durch Falten und gegebenenfalls Biegen erfolgt. Dieser zweite Schritt läßt sich in gewisser Weise entfernt mit der Bearbeitung von Blechstücken auf einer Abkantpresse oder einer Blechrollmaschine vergleichen, da auch beim erfindungsgemäßen Verfahren eine sukzessive Schaffung der einzelnen Faltungen bzw. der einzelnen Biegevorgänge jeweils um eine Achse erfolgt.

Im dritten Schritt schließlich, in dem die Verbindung mehrerer solcher Folienabschnitte bewerkstelligt wird, ist die genaue Positionierung der einzelnen Folienabschnitte und die Abfolge ihrer Verbindung wesentlich, doch ist dieser auf den heutigen Handhabungsvorrichtungen mit den in der KFZ-Technik einzuhaltenden Toleranzen durchaus beherrschbar.

Die Erfindung wird im folgenden an Hand der Zeichnung näher erläutert. Dabei zeigt
die Fig. 1 einen erfindungsgemäßen Tisch zur Konfektionierung eines Rohlings aus einer FFC,
die Fig. 2 eine Spule mit einem darin aufgewickelten Rohling und
die Fig. 3 einen erfindungsgemäßen Tisch zur Schaffung eines Folienabschnittes aus einem Rohling.

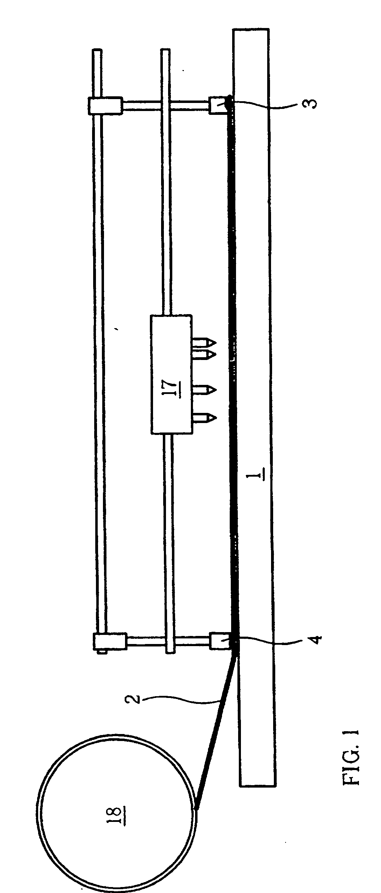

Die erste erfindungsgemäße Vorrichtung, mit der die Konfektionierung erfolgt, besteht im wesentlichen, wie aus der schematischen Fig. 1 ersichtlich, aus einem Tisch 1, auf dem die zu bearbeitende FFC 2 von einer Vorratsspule 18 im Zuge des Abziehens von der Vorratsspule mittels eines Greifers 3 in Längsrichtung aufgelegt wird. Wenn die gewünschte Länge erreicht ist, wird die FFC auf der Spulenseite mittels eines Halters 4, der entweder Teil des Greifers 3 ist, oder auch ein Teil des Tisches 1 oder von beiden unabhängig sein kann, fixiert. Es ist auch möglich, daß die FFC bereits in (zumeist mit einem gewissen Übermaß) abgelängter Form vorliegt, der Greifer 3 muß dann nur zu deren Ergreifen adaptiert sein, der Bearbeitungsvorgang selbst bleibt gleich.

Um zu einer exakten Lage und der genauen Länge der unter Umständen durch die vorherige Lagerung noch nicht genau eben (gestreckt) angeordneten FFC 2 zu kommen, kann durch Ausüben einer vorbestimmten Zugkraft die FFC 2 vor dem endgültigen Fixieren am Tisch 1 gestreckt werden.

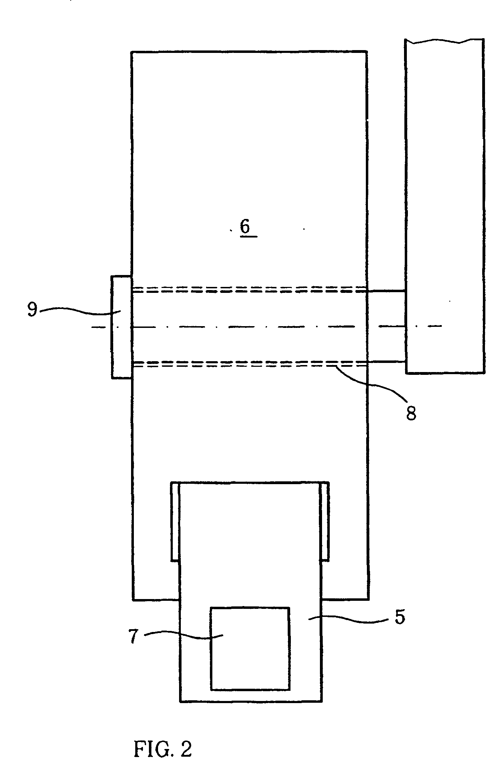

Sodann werden mittels passender Werkzeuge, die im gezeigten Ausführungsbeispiel gemeinsam in einer Bearbeitungsvorrichtung 17 angeordnet sind, die vorbestimmten Markierungen an der FFC 2 angebracht, es werden, beispielsweise mittels eines Lasers, eines Plasmastrahls oder mechanisch durch Fräsen oder andere Methoden, die Leiter der FFC 2 an den vorbestimmten Stellen (Fenstern) freigelegt, es werden, wenn gewünscht, an vorbestimmten Stellen Längsschnitte zwischen den Leitern vorgenommen, um beispielsweise später Abzweigungen bilden zu können, und es werden gegebenenfalls die Enden (oder auch nur eines) der FFC 2 mit Steckern oder mit abisolierten Bereichen versehen. Dazu ist es möglich oder notwendig, daß der Greifer 3 die FFC 2 freigibt, während der Halter 4 von Haus aus so angeordnet sein kann, daß das in seinem Bereich befindliche Ende der FFC 2 frei zugänglich ist. Um in jedem Fall die FFC 2 entsprechend festzuhalten, ist in diesem Fall zumindest ein weiterer Halter im entsprechenden Endbereich der FFC 2 vorzusehen, der die Fixierung übernimmt, wenn der Greifer 3 und/oder der Halter 4 die FFC freigibt. Wesentlich ist, daß zumindest in einem Endbereich der FFC 2 eine Endmarkierung 7 (Fig. 2) angeordnet wird, die eine spätere Identifikation der FFC 2 ermöglicht. Die so konfektionierte FFC wird als Rohling 5 bezeichnet. Im dargestellten Beispiel werden nur Fenster von oben in der Isolierung angebracht, es ist selbverständlich möglich, derartige Fenster und/oder Markierungen auch auf der Unterseite der FFC vorzusehen.

Die in Fig. 1 dargestellte Vorrichtung zeigt den Greifer 3 und den Halter 4 gemeinsam auf einer Längsschiene verfahrbar angeordnet, die Längsschiene, die die Bearbeitungsvorrichtung 17 trägt ist dabei auf Querträgern angeordnet, die "vor" der Zeichenebene liegen. Eine derartige Anordnung ist selbverständlich nicht notwendig und kann durch eine Vielzahl von anderen, aus der automatisierten Fertigung bekannten Konstellationen ergänzt oder ersetzt werden.

Die Endmarkierung 7 kann durch Aufbringen von Farbe, das Aufkleben einer Ettikette (bar-code), das Anbringen einer magnetischen Markierung, eines Transponders oder ähnlichem gebildet werden, es ist dabei nur auf die Haltbarkeit, die Interpretierbarkeit und die Kosten zu achten.

Für das weitere Vorgehen gibt es mehrere Möglichkeiten:

Bevorzugt wird die sofortige anschließende Weiterverarbeitung, wie sie weiter unten beschrieben wird. Im Falle einer Zwischenlagerung besteht die Möglichkeit, den Rohling 5 hängend zu lagern. Dazu wird ein Ende des Rohlings 5 von einem nicht dargestellten Greifer erfaßt und mit diesem Greifer in das Zwischenlager verbracht. Dazu kann der Greifer beispielsweise entlang einer Tragschiene verfahrbar angeordnet sein. Im Zwischenlager können die Greifer dicht an dicht angeordnet sein oder auch den Rohling 5 an eine spezielle Lagerhalterung übergeben. Derartige Vorrichtungen sind aus der industriellen Fertigung bekannt und bedürfen hier keiner weiteren Erläuterung. Wesentlich ist aber dabei, daß die Endmarkierung 7 am Rohling 5 schnell und zuverläßig ablesbar ist, um eine übersichtliche Lagerung und einen schnellen Zugriff zu erlauben. Es wird daher bevorzugt, daß der Greifer bzw. die Lagerhalterung den Rohling 5 an dem der Endmarkierung 7 benachbarten Ende ergreift, da so die Lage und damit die Zugänglichkeit der Endmarkierung 7 definiert ist.

Eine andere Form der Zwischenlagerung ist in Fig. 2 dargestellt und besteht in der Unterbringung des Rohlings 5 in aufgerollter Form in einer passenden zylindrischen Kassette 6. Dabei ist wesentlich, daß das Ende des Rohlings, das die Endmarkierung 7 trägt, ein Stück aus der Kassette 6 ragt, um die Endmarkierung 7 leicht und zuverläßig ablesen (und auch ergreifen) zu können. In einer Variante befindet sich die Endmarkierung 7 geschützt in der Kassette, ist aber durch das Kassetttengehäuse ablesbar (beispielsweise magnetisch). Die Kassetten 6 können in Schränken od.dergl., die als Zwischenlager dienen, gelagert werden. Bevorzugt weisen die Kassetten 6 eine zentrale Handhabe, vorteilhafterweise in Form einer Durchgangsöffnung 8, auf, in die Dorne 9 der weiteren Handhabungsautomaten passend eingeführt werden können. Im gezeigten Ausführungsbeispiel weist der Dorn 9 an seinem freien Ende radial verschiebliche Elemente auf, die die Kassette am Dorn festlegen, doch ist es selbverständlich möglich, diese Verbindung anders zu gestalten.

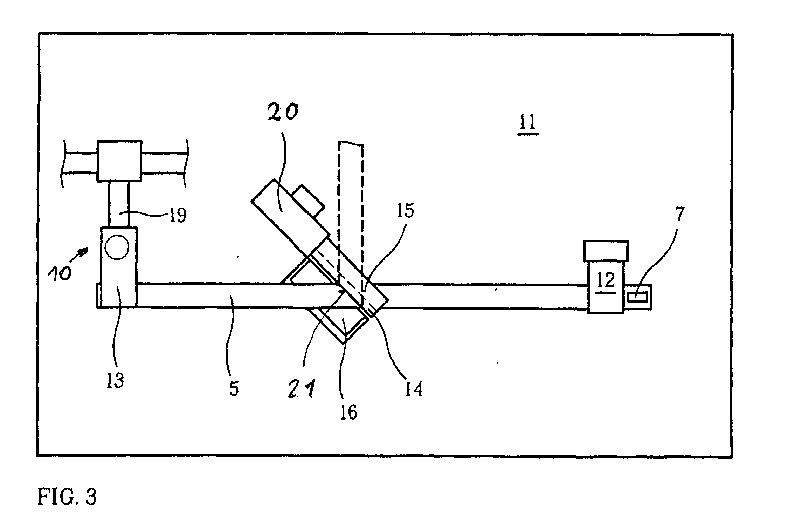

Die nächste erfindungsgemäße Bearbeitungsstation, die Faltungsstation, bringt nun die Rohlinge 5 in passende Form und ist in Fig. 3 schematisch dargestellt. Es wird im kommenden die Faltung von Rohlingen 5, die entweder direkt von der Konfektionierung oder von einem Hänge-Zwischenlager kommen, beschrieben. Die Faltung der in Kassetten zwischengelagerten Rohlinge wird später erläutert. Mittels eines Greifers 10 werden die Rohlinge 5 einem Tisch 11 zugeführt, wobei sie im Bereich ihrer beiden Enden in gestreckter Lage gehalten werden. Nachdem Sie am Tisch in richtiger Position abgelegt sind, wird eines ihrer Enden am Tisch von einem Niederhalter 12, der Teil des Greifers 10 oder des Tisches 11 sein kann, fixiert. Das andere Ende des noch gestreckt am Tisch 11 liegenden Rohlings 5 wird nach wie vor vom Greifer 10 gehalten, diese Halterung wird im folgenden Manipulator 13 genannt.

Es wird nun an der Stelle des Rohlings 5, an der eine Faltung 21 vorgenommen werden soll, ein Faltlineal 15 von der Seite her knapp oberhalb des Rohlings 5 über diesen geschoben, wobei es in einem Winkel zur Längsrichtung des Rohlings verläuft, der nach erfolgter Faltung den vorbestimmten Verlauf des FFC's in diesem Faltungsbereich bedingt. Bei der dargestellten 90°-Faltung beträgt dieser Winkel 45°. Mit dem Faltlineal 15 oder nach dessen Vorschub wird entlang einer passenden Nut dieses Faltungslineals ein Radiushalter 14 über die ganze Länge der zu bildenden Faltung vorgeschoben, der sicherstellt, daß beim Falten des Rohlings 5 ein vorgegebener Mindestkrümmungsradius eingehalten wird, um eine Beschädigung der Isolierung und/oder Leiter des FFC's zuverläßig zu verhindern. Dieser Radiushalter besteht bevorzugt aus einem passenden Kunststoffprofil, das von einer Spule 20, Haspel od.dergl. abgewickelt wird. Schließlich wird das Faltlineal samt dem Radiushalter nach unten bewegt und bildet so eine, allerdings nur mit mäßiger Kraft wirkende, Fixierung des Rohlings 5 im Bereich der kommenden Faltung.

Wenn das Faltungslineal 15 und der Radiushalter 14 an ihrem Platz sind, wird der Manipulator 13 entlang des Rohlings 5 in Richtung zum Niederhalter 12 bewegt, wobei er entweder etwas über die Tischebene gehoben wird, um die Bildung einer S-förmigen Schlaufe des Rohlings zu erlauben, oder er wird am Anfang der Bewegung um eine Achse 19 parallel zur Tischebene und normal zur Längsrichtung des Rohlings verdreht, um die Ausbildung einer halbkreisförmigen Schlaufe zu erlauben. Sodann erfolgt die Bewegung solange, bis die Schlaufe mit ihrer dem Tisch zugewandten Seite in den Bereich des Faltlineales 15 kommt.

Es erfolgt nun eine Bewegung des Manipulators 13 dergestalt, daß die bisher in einer Ebene normal zum Tisch und durch die Längsrichtung des Rohlings 5 liegende Schlaufe sich schräg zur Längsrichtung stellt, bis sie in ihren Höhenschichtlinien parallel zum Faltlineal 15 verläuft. Nun kann die Schlaufe "zugezogen" werden, was durch eine Falzplatte 16 beschleunigt und für die FFC schonender gestaltet wird, da statt bzw. zusätzlich zum Zug eine richtiggehende Biegekraft aufgebracht wird. Durch die Falzplatte 16 wird auch eine exakte Faltung erreicht, was für die weitere Verarbeitung des Rohlings wegen der richtigen Lage der bereits am Rohling angeordneten Fenster, Schlitze etc. wesentlich ist. Schließlich ist die Falzplatte 16 auch wichtig, um das endgültig erhaltene Foliennetzwerk in möglichst dünner Form zu erhalten.

Es wird nun der Radiushalter 14 knapp neben der gebildeten Falte durchtrennt und sodann das Faltlineal 15 zurückgezogen. Es kann selbverständlich auch zuerst das Faltlineal zurückgezogen und sodann der Radiushalter durchtrennt werdern. Das abgetrennte Stück des Radiushalters bleibt zum Schutz der Faltung in ihr. Um die Positionierung des Rohlings am Tisch 11 zu garantieren, kann die Falzplatte 16 während des Zurückziehens des Faltlineals und des Durchtrennens des Radiushalters nur etwas entlastet werden, ohne noch vollständig vom Rohling 5 abgehoben worden zu sein. Schließlich wird auch die Falzplatte 16 vollständig abgehoben und, wie auch gegebenenfalls die gesamte Vorrichtung des Faltlineals 15 samt Radiushalter 14 und Spule 20, aus dem Bereich der Faltung gebracht, womit die Faltung beendet ist.

Wenn nun diese erste Faltung 21 erfolgt ist, verläuft der Abschnitt des Rohlings 5 zwischen dem Niederhalter 12 und zumindest ein Stück über diese erste Faltung hinaus bereits so, wie es endgültig vorgesehen ist (strichliert eingetragen). Wenn es sich um einen Folienabschnitt handelt, der nur eine Faltung aufweist, ist dieser fertig und kann, wie weiter unten beschrieben, vom Tisch 11 entfernt werden.

Um eine weitere Faltung des selben Rohlings 5 vorzunehmen, ist nur an passender Stelle zwischen der bereits erfolgten Faltung und dem Manipulator ein weiteres Faltlineal samt Radiushalter entsprechend vorzusehen und zu aktivieren, wobei Schritt für Schritt wie oben beschrieben zu verfahren ist. Es können auf diese Weise alle notwendigen Faltungen vorgenommen werden, die für den betrachteten Folienabschnitt vorgesehen sind.

Andere Manipulationen, die in diesem Faltungsabschnitt vorgenommen werden können, sind beispielsweise das getrennte Falten von Rohlingsbereichen, die in Längsrichtung geschlitzt sind, wie dies weiter oben für Abzweigungen beschrieben worden ist. Dazu ist es notwendig, daß der Manipulator 13 zweigeteilt ist und daß beide Teile für die im ungeschlitzten Bereich des Rohlings liegenden Faltungen simultan bewegt werden. Eine andere Möglichkeit ist es, den Manipulator zu wechseln, doch ist eine solche Maßnahme immer riskant und stellt eine unangenehme Fehlerquelle sowohl im Ablauf der Fertigung als auch für die Einhaltung der vorgegebenen Toleranzen dar.

Wenn der Rohling 5 in einer Kassette 6 vorliegt, kann diese als Manipulator verwendet werden, wenn nur sichergestellt ist, daß das Ausgeben des Rohlings 5 erst bei einer gewissen Zugkraft erfolgt oder durch eine lösbare Bremse od.dergl. verhindert werden kann. Es ist in diesem Falle möglich, mit der ersten Faltung zu beginnen, ohne zuvor den Rohling in seiner ganzen Länge auf den Tisch 11 auszulegen, und auch in der Folge das Ausgeben aus der Kassette 6 mit dem Fortschreiten der Faltungen abzustimmen.

Der Tisch 11 muß nicht völlig eben sein, sondern kann die Kontur des Fahrzeugteiles aufweisen, in dem der Folienabschnitt später eingebaut wird. Wesentlich ist aber dabei, daß darauf geachtet wird, daß die CCF's nur in einer Richtung gebogen werden können, also nicht "gebeult" werden können, ohne daß Beschädigungsgefahr besteht. Es können auf diese Weise Stufen, Rundungen oder Knicke aus der Ebene bzw. Hauptebene des Folienabschnittes geschaffen werden, die bei der Weiterverarbeitung bzw. dem Einbau wichtig sind. Derartige Stufen oder Knicke können duchr Anpreßrollen oder bewegliche Tischteile, die ähnlich wie die Falzplatten 16, aber mit geringerem Schwenkwinkel als diese agieren, geschaffen werden. Selbverständlich ist dabei auch darauf zu achten, daß die Mindestkrümmungsradien zum Vermeiden von Beschädigungen der FFC eingehalten werdeen. Dies ist durch entsprechende Ausbildung der Stufen bzw. Knicke und der Anpreßelemente in Kenntnis der Erfindung leicht möglich.

Wie eingangs ausgeführt, sind zumeist mehrere Folienabschnitte miteinander zu einem Einbauteil zu verbinden. Diese Verbindung hat sowohl mechanisch als auch elektrisch zu erfolgen und erfordert das lagegenaue übereinander Positionieren von jeweils zumindest zwei Folienabschnitten 17 auf einem Tisch, sodaß die freigelegten Kabelabschnitte (Fenster) übereinander zu liegen kommen, das Verschweißen, Verlöten, Verreiben etc der Leiter, gegebenenfalls die Wiederholung dieser Prozedur mit weiteren Folienabschnitten und schließlich oder auch nach jedem Schritt (oder nach einigen Schritten) das Aufbringen passenden Isolationsmaterials und Verbinden dieses Materials mit dem Folienmaterial der Folienabschnitte, bis schließlich der Einbauteil fertig ist.

Zu bedenken ist dabei, daß die Einbauteile, wie oben bezüglich der Rohlinge kurz ausgeführt, nicht unbedingt plan sein müssen, sondern durchaus bombiert oder gestuft ausgebildet sein können (Himmel, Türen, etc.). Dies bedingt, daß auch die Tische zur Schaffung der Einbauteile nicht unbedingt eben sind, sondern die passende Form aufweisen müssen. Dies ist aber in Kenntnis der Erfindung für den Fachmann auf dem Gebiete der FFC's durchaus zu meistern.

Die fertigen Einbauteile weisen durch ihre im wesentlichen zweidimensionale und an verschiedenen Stellen durch die Verschweissungen quasi-vernetzte Struktur eine ausreichende Steifigkeit auf, um mittels Handhabungsautomaten ergriffen und an passender Stelle im Auto eingebaut werden zu können. Auf diese Weise können z.Bsp. alle für eine Türe notwendigen Kabel von einer zentralen Zuleitung ausgehend mit einem einzigen Stecker mit einem vom Wagenkasten kommenden Kabel verbunden und so versorgt werden. Bei einer Fahrertüre kann es sich dabei um die Kabel für alle Fensterheber des Fahrzeuges handeln, für die Steuerung der Zentralverriegelung, die Beleuchtung der in der Tür befindlichen "Tür-Offen" Leuchte für nachkommende Fahrzeuge, der Signalleitungen für die "Tür-Offen" Anzeige am Armaturenbrett und mehr.

Es ist selbverständlich möglich, zur Erhöhung der Steifigkeit an anderen Kreuzungspunkten (an denen keine elektrische Verbindung herzustellen ist) die FFCs miteinander zu Verkleben oder zu Verschweißen. Schließlich ist es auch möglich. Passende Versteifungselemente, bevorzugt aus Kunststoff, die auch Handhaben für die Manipulatoren tragen können, in die Einbauteile mitzumontieren.

## Patentansprüche

1. Verfahren zur Herstellung eines Rohlings (5), gebildet aus einem Flachkabel, eines sogenannten FFC (2), bestehend aus mehreren parallel zueinander angeordneten elektrischen Leitern, die zwischen elektrisch isolierendem und biegeweichem Material eingebettet sind, insbesondere für die Weiterverwendung in Kraftfahrzeugen, **dadurch gekennzeichnet, daß** das FFC (2) von einer Vorratstrommel als Endlosmaterial oder im gegebenenfalls mit Übermaß abgelängtem Zustand von einem Lager mittels eines Greifers (3) in seiner Längsrichtung über einen Tisch (1) gezogen und auf diesem ausgelegt wird, worauf ein dem Greifer (3) abgewandter Bereich des FFC, dessen Ende, von einem Halter (4) am Tisch (1) fixiert und gegebenenfalls in diesem Bereich durchtrennt wird, daß das greiferseitige Ende, bevorzugt unter Anwendung einer vorbestimmten Zugkraft, so am Tisch (1) fixiert wird, daß das FFC (2) in gestreckter Lage am Tisch (1) fixiert ist, und daß sodann an vorbestimmten Stellen, Fenster genannt, die Ummantelung von Leitern, beispielsweise mittels Laser oder Plasma oder mechanisch entfernt wird, daß gegebenenfalls zwischen den Leitern an vorbestimmten Stellen Längsschlitze angebracht werden, daß gegebenenfalls vorbestimmte Stellen des FFC mit Markierungen versehen werden, daß das FFC auf genaue Länge geschnitten und gegebenenfalls zumindest ein Ende abisoliert und gegebenenfalls mit einem Stecker versehen wird und daß im Bereich zumindest eines der Enden eine Endmarkierung (7) aufgebracht wird, die den so hergestellten Rohling (5) identifiziert.

2. Verfahren nach Anspruch 1, **dadurch gekennzeichnet, daß** der Rohling (5) nach seiner Herstellung in einer im wesentlichen zylindrischen Kassette (6) aufgerollt wird, wobei die Endmarkierung (7) entweder aus der Kassette (6) ragt oder durch die Kassettenwand lesbar ist.

3. Vorrichtung zur Durchführung des Verfahrens nach Anspruch 1, im wesentlichen bestehend aus einem Tisch (1), einem Greifer (3), einem Halter (4) und zumindest einer Bearbeitungsvorrichtung **dadurch gekennzeichnet, dass** Greifer (3) und Halter (4) auf einer Längsschiene verfahrbar angeordnet sind.

4. Vorrichtung nach Anspruch 3, **dadurch gekennzeichnet, daß** die zumindest eine Bearbeitungsvorrichtung (17) auf einer Längsschiene oberhalb des FFC angeordnet ist.

5. Vorrichtung nach Anspruch 4, **dadurch gekennzeichnet, daß** die Bearbeitungsvorrichtung (17) einen Laser aufweist.

6. Vorrichtung nach Anspruch 4, **dadurch gekennzeichnet, daß** die Bearbeitungsvorrichtung (17) eine Trennvorrichtung für das Flachband aufweist.

7. Vorrichtung nach Anspruch 4, **dadurch gekennzeichnet, daß** die Bearbeitungsvorrichtung (17) einen Markierer aufweist.

8. Vorrichtung nach Anspruch 4, **dadurch gekennzeichnet, daß** der Tisch (1) einen weiteren Halter aufweist und der Greifer (3) oder die Bearbeitungsvorrichtung (17) eine Steckermontagevorrichtung umfaßt.

## Claims

1. Method for producing a blank (5), formed from a flat flexible cable, what is known as an FFC (2), comprising a plurality of electrical conductors which are arranged in parallel with one another and are embedded between electrically insulating and flexible material, in particular for further use in motor vehicles, **characterized in that** the FFC (2) is drawn by means of a gripper (3) from a dispensing drum as endless material or from a store in the form of cut-to-length sections which are optionally excessively long in its longitudinal direction over a table (1) and laid out on the latter, after which a region of the FFC facing away from the gripper (3), its end, is secured to the table (1) by a holder (4) and optionally severed in this region, **in that** the gripper end is secured to the table (1), preferably using a predetermined tensile force, such that the FFC (2) is secured to the table (1) in the stretched state, and **in that** the sheathing of conductors is then removed at predetermined locations known as windows, for example by means of laser or plasma or mechanical means, **in that** longitudinal slots are optionally made between the conductors at predetermined locations, **in that** predetermined locations of the FFC are optionally provided with markers, **in that** the FFC is cut to a precise length and the insulation on at least one end is optionally stripped and, if desired, provided with a plug, and **in that** an end marker (7) which identifies the blank (5) produced in this way is applied in the region of at least one of the ends.

2. Method according to Claim 1, **characterized in that** the blank (5) is rolled up in an essentially cylindrical cassette (6) after it has been produced, with the end marker (7) either protruding out of the cassette (6) or being legible through the cassette wall.

3. Apparatus for carrying out the method according to Claim 1, essentially comprising a table (1), a gripper (3), a holder (4) and at least one processing apparatus, **characterized in that** the gripper (3) and holder (4) are movably arranged on a longitudinal rail.

4. Apparatus according to Claim 3, **characterized in that** the at least one processing apparatus (17) is arranged on a longitudinal rail above the FFC.

5. Apparatus according to Claim 4, **characterized in that** the processing apparatus (17) has a laser.

6. Apparatus according to Claim 4, **characterized in that** the processing apparatus (17) has a separating device for the flat strip.

7. Apparatus according to Claim 4, **characterized in that** the processing apparatus (17) has a marking device.

8. Apparatus according to Claim 4, **characterized in that** the table (1) has a further holder, and the gripper (3) or the processing apparatus (17) comprises a plug mounting apparatus.

## Revendications

1. Procédé de fabrication d'une ébauche (5) formée d'un câble plat, dit câble FFC (câble en nappe flexible) (2), comprenant plusieurs conducteurs électriques qui sont disposés parallèlement les uns aux autres et sont noyés dans un matériau électriquement isolant et flexible, destinée plus particulièrement à être utilisée dans des véhicules automobiles, **caractérisé par le fait qu'**on tire dans la direction longitudinale, sur une table, à l'aide d'une pince (3), le câble FFC (2) sous forme de bande de matériau continue provenant d'un tambour d'alimentation ou le cas échéant sous forme de tronçons coupés avec une surlongueur provenant d'un magasin, et on l'étend sur celle-ci, puis on coupe une partie du câble FFC éloignée de la pince (3), dont l'extrémité est fixée à la table (1) à l'aide d'un moyen de serrage (4), **par le fait qu'**on fixe l'extrémité côté pince à la table (1), de préférence en appliquant une force de traction prédéterminée, de manière à maintenir le câble FFC (2) étendu sur la table (1), **par le fait qu'**on élimine en des emplacements prédéterminés appelés fenêtres, l'enrobage de conducteurs, par exemple par laser, par plasma ou par des moyens mécaniques, **par le fait que** le cas échéant on réalise à des emplacements prédéterminés des fentes longitudinales entre les conducteurs, **par le fait que** le cas échéant on applique des marques à des emplacements prédéterminés du câble FFC, **par le fait qu'**on coupe le câble FFC à la longueur exacte et le cas échéant on dénude au moins une extrémité et le cas échéant on la munit d'un connecteur et **par le fait que** dans a région d'au moins une des extrémités on applique une marque finale (7) qui identifie l'ébauche (5) fabriquée.

2. Procédé selon la revendication 1, **caractérisé par le fait que** l'ébauche (5) après sa fabrication est enroulée dans une cassette (6) essentiellement cylindrique, la une marque finale (7) soit dépassant hors de la casette (6), soit étant lisible au travers de la cassette (6).

3. Dispositif pour la mise en oeuvre du procédé selon la revendication 1, comprenant essentiellement une table (1), une pince (3), un moyen de serrage (4) et au moins un dispositif de façonnage, **caractérisé par** le fait la pince (3) et le moyen de serrage (4) peuvent être déplacés sur un rail longitudinal.

4. Dispositif selon la revendication 3, **caractérisé par le fait que** le dispositif de façonnage (17) est disposé sur un rail longitudinal au-dessus du câble FFC.

5. Dispositif selon la revendication 4, **caractérisé par le fait que** le dispositif de façonnage (17) comporte un laser.

6. Dispositif selon la revendication 4, **caractérisé par le fait que** le dispositif de façonnage (17) comporte un dispositif de séparation pour le ruban plat.

7. Dispositif selon la revendication 4, **caractérisé par le fait que** le dispositif de façonnage (17) comporte un dispositif de marquage.

8. Dispositif selon la revendication 4, **caractérisé par le fait que** la table (1) comporte un moyen de serrage supplémentaire et que la pince (30) ou le dispositif de façonnage (17) comporte un dispositif de montage de connecteur.
